# EUROPEAN PATENT APPLICATION

(11) **EP 4 773 277 A1**
(43) Date of publication of application: **08.07.2026**
(21) Application number: 25227133.3
(22) Date of filing: 24.12.2025
(51) Int. Cl.: H01M 10/052, H01M 10/42, H01M 50/417, H01M 50/434, H01M 50/451, H01M 50/489

(54) **INSULATING COATING COMPOSITION, INSULATING LAYER, AND RECHARGEABLE LITHIUM BATTERY CONTAINING THE SAME**

(30) Priority: 03.01.2025 KR 20250000748
(71) Applicant: SAMSUNG SDI CO., LTD., Yongin-si, Gyeonggi-do 17084 (KR)
(72) Inventor: Han, Seung-Hun, 17084 Yongin-si, Gyeonggi-do (KR); Hong, Minyoung, 17084 Yongin-si, Gyeonggi-do (KR); Jung, Jiyoon, 17084 Yongin-si, Gyeonggi-do (KR); Park, Minsu, 17084 Yongin-si, Gyeonggi-do (KR); Choi, Kyubuem, 17084 Yongin-si, Gyeonggi-do (KR)
(74) Representative: Michalski Hüttermann & Partner mbB

(57) **Abstract**

Provided is an insulating coating composition, an insulating layer, and a rechargeable lithium battery including the insulating layer. An insulating coating composition includes a boehmite particle and a binder, wherein the boehmite particle has a plate-like structure extending in a first direction and a second direction that crosses the first direction, the boehmite particle has a first width in the first direction, a second width in the second direction, and a thickness in a third direction perpendicular to the first direction and the second direction, a ratio of the thickness to the first width is about 0.8 or less, and a ratio of the thickness to the second width is about 0.8 or less.

## Description

### CROSS-REFERENCE TO RELATED APPLICATIONS

This U.S. non-provisional patent application claims priority under 35 U.S.C. § 119 of Korean Patent Application No.10-2025-0000748, filed on January 3, 2025, the entire contents of which are hereby incorporated by reference.

### BACKGROUND

The present disclosure herein relates to an insulating coating composition, an insulating layer, and a rechargeable lithium battery including the insulating coating composition.

With the increase of battery-using electronic devices, such as, e.g., mobile phones, laptop computers, electric vehicles, and the like, demand for a rechargeable battery with high energy density and high capacity has increased. Accordingly, improving the performance of the rechargeable lithium battery may be advantageous.

The rechargeable lithium battery includes a positive electrode and a negative electrode containing active materials capable of intercalation and deintercalation of lithium ions, and an electrolyte solution. Electrical energy is produced by oxidation and reduction reactions when the lithium ions are intercalated and deintercalated into/from the positive electrode and the negative electrode.

### SUMMARY

The present disclosure includes an insulating coating composition which has desired or improved dispersibility, desired or improved dispersion stability and storage stability, and which is relatively simple to apply.

The present disclosure also includes an insulating layer having desired or improved insulation.

The present disclosure also includes a rechargeable lithium battery capable of reducing or preventing an internal short circuit.

An example embodiment of the present disclosure includes an insulating coating composition including a boehmite particle and a binder, wherein the boehmite particle has a plate-like structure extending in a first direction and a second direction that crosses the first direction, the boehmite particle has a first width in the first direction, a second width in the second direction, and a thickness in a third direction perpendicular to the first direction and the second direction, a ratio of the thickness to the first width is in a range of 0.8 or less, and a ratio of the thickness to the second width is in a range of about 0.8 or less.

In an example embodiment of the present disclosure, an insulating layer includes a boehmite particle and a binder, the boehmite particle has a plate-like structure extending in a first direction and a second direction that crosses the first direction, the boehmite particle has a first width in the first direction, a second width in the second direction, and a thickness in a third direction perpendicular to the first direction and the second direction, a ratio of the thickness to the first width is about in a range of 0.8 or less, and a ratio of the thickness to the second width is in a range of 0.8 or less.

In an example embodiment of the present disclosure, a rechargeable lithium battery includes the insulating layer described above.

### BRIEF DESCRIPTION

The accompanying drawings are included to provide a further understanding of the present disclosure, and are incorporated in and constitute a part of this specification. The drawings illustrate example embodiments of the present disclosure and, together with the description, help explain principles of the present disclosure. In the drawings:
FIG. 1 is a simplified conceptual diagram illustrating a rechargeable lithium battery according to example embodiments of the present disclosure;
FIGS. 2 to 5 are cross-sectional views schematically illustrating a rechargeable lithium battery according to an example embodiment;
FIG. 6 is a cross-sectional view illustrating an example of a rechargeable lithium battery applied with an insulating layer according to example embodiments of the present disclosure;
FIG. 7 is a schematic diagram illustrating an insulating layer according to example embodiments of the present disclosure;
FIG. 8 is a schematic diagram illustrating a boehmite particle according to example embodiments of the present disclosure;
FIG. 9 is a schematic diagram illustrating an insulating coating composition according to example embodiments of the present disclosure;
FIG. 10 is a scanning electron microscope image of boehmite particles according to Examples 1 to 3;
FIG. 11 is a scanning electron microscope image of boehmite particles according to Comparative Examples 1 to 3; and
FIG. 12 is a graph showing the change in the amount of solid content in an upper part of an insulating coating composition, according to each of Example 1 and Comparative Example 1, over time.

### DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that, when an element is referred to as being "on" another element, the element may be directly on the other element, or intervening elements may be present therebetween. In the drawings, thicknesses of components may be exaggerated for effectively explaining the technical contents. Like reference numerals or symbols refer to like elements throughout the specification.

Example embodiments described herein are explained with reference to cross-sectional views and/or plan views, which are ideal illustrations of the present disclosure. In the drawings, thicknesses of films and regions may be exaggerated for effectively explaining the technical contents. Accordingly, the regions illustrated in the drawings have schematic properties, and the shapes of the regions illustrated in the drawings are intended to illustrate a specific shape of the regions of the element, and are not intended to limit the scope of the disclosure. In various example embodiments of the present specification, terms such as "first," "second," and "third" are used to describe various components, but these components should not be limited by these terms. These terms are merely used to distinguish one component from another. Example embodiments described and illustrated herein also include complementary embodiments thereof.

The terminology used herein is for describing example embodiments and is not intended to limit the present disclosure. In this specification, the singular forms are intended to include the plural forms as well, unless the context clearly indicates otherwise. The terms "comprises" and/or "comprising" used in this specification do not exclude the presence or addition of one or more other components.

In this specification, "combination thereof" may refer to a mixture, a stack, a composite, a copolymer, an alloy, a blend, a reaction product of components, and the like.

Unless otherwise defined in this specification, a particle diameter may be an average particle diameter. Also, the expression "particle diameter" indicates an average particle diameter (D50) which refers to a diameter of particles at a cumulative volume of ≥ 50 vol% in a particle size distribution. The average particle diameter (D50) may be measured by a method known to those skilled in the art, for example, may be measured by a particle size analyzer, or may also be measured using a transmission electron microscope (TEM) image or a scanning electron microscope (SEM) image. Alternatively, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, For example, after dispersing particles to be measured in a dispersion medium, the dispersion medium is introduced into a commercial laser diffraction particle size measurement instrument (e.g., Microtrac MT 3000) and irradiated with ultrasonic waves of 28 kHz at an output of 60 W, and the average particle diameter (D50) based on about 50% of particle size distribution in the measurement instrument may then be calculated.

In this specification, the phrases such as "A or B," "at least one among A and B," "at least one of A or B," "A, B, or C," "at least one among A, B, and C," and "at least one of A, B, or C" may each include any one of the items listed together in the corresponding phrase, among the phrases, or any possible combination thereof.

When the terms "about" or "substantially" are used in this specification in connection with a numerical value, it is intended that the associated numerical value include a tolerance of +10% around the stated numerical value. When ranges are specified, the range includes all values therebetween such as increments of 0.1%.

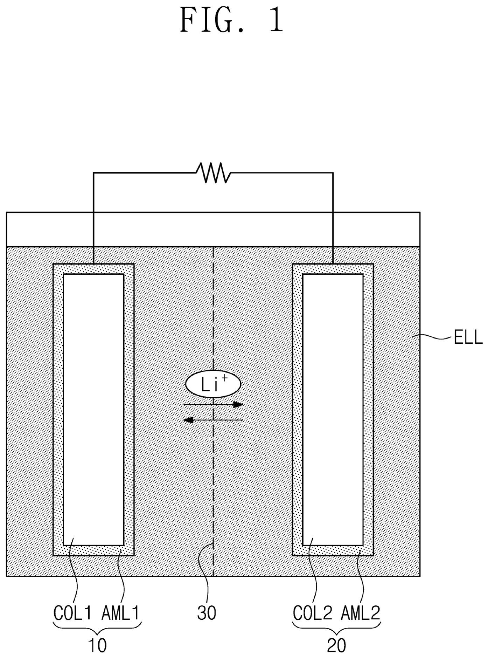

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material.

For example, the positive electrode 10 may further include an additive that may constitute a sacrificial positive electrode.

An amount of the positive electrode active material in the positive electrode active material layer AML1 may be in a range of ≥ 90 wt% to ≤ 99.5 wt% based on 100 wt% of the positive electrode active material layer AML1. An amount of each of the binder and the conductive material may be in a range of ≥ 0.5 wt% to ≤ 5 wt% based on 100 wt% of the positive electrode active material layer AML1.

The binder is configured to attach the positive electrode active material particles to each other, and to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, and the like, as non-limiting examples.

The conductive material may impart conductivity to the electrode. Any material that does not cause chemical change, and that conducts electrons, may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector COL1, but the material of the current collector COL1 is not limited thereto.

### Positive Electrode Active Material

The positive electrode active material in the positive electrode active material layer AML1 may include a compound (lithiated intercalation compound) that is capable of reversibly intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content of greater than or equal to ≤ 80 mol%, greater than or equal to ≤ 85 mol%, greater than or equal to ≤ 90 mol%, greater than or equal to ≤ 91 mol%, or greater than or equal to ≤ 94 mol% and less than or equal to ≤ 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

### Negative Electrode 20

The negative electrode 20 for a rechargeable lithium battery includes a current collector COL2 and a negative electrode active material layer AML2 on the current collector COL2. The negative electrode active material layer AML2 may include a negative electrode active material, and may further include a binder and/or a conductive material.

For example, the negative electrode active material layer AML2 may include ≥ 90 wt% to ≤ 99 wt% of the negative electrode active material, ≥ 0.5 wt% to ≤ 5 wt% of the binder, and ≥ 0 wt% to ≤ 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity to the electrode. Any material that does not cause an adverse chemical change, and that conducts electrons, may be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles, and amorphous carbon applied onto the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of ≥ 1:1 to ≤ 1:9.

The lithium salt dissolved in the organic solvent is configured to supply lithium ions in a battery, to enable an operation of a rechargeable lithium battery, and to improve transportation of the lithium ions between positive and negative electrodes. Examples of the lithium salt include one or two or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, lithium bis(fluorosulfonyl)imide (Li(FSO₂)₂N , LiFSI), LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)borate(LiDFOB), lithium difluorobis(oxalato)phosphate (LiDFBOP), and lithium bis(oxalato) borate (LiBOB).

### Rechargeable Lithium Battery

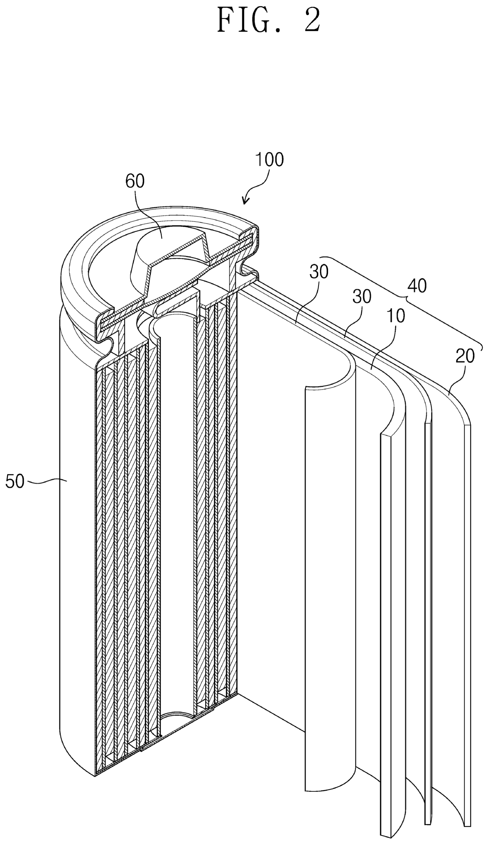

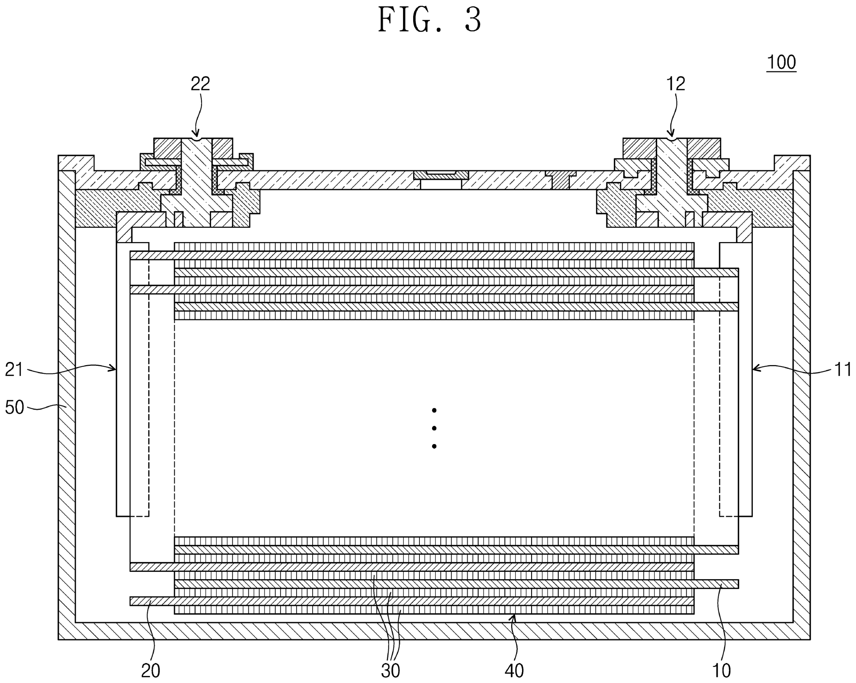

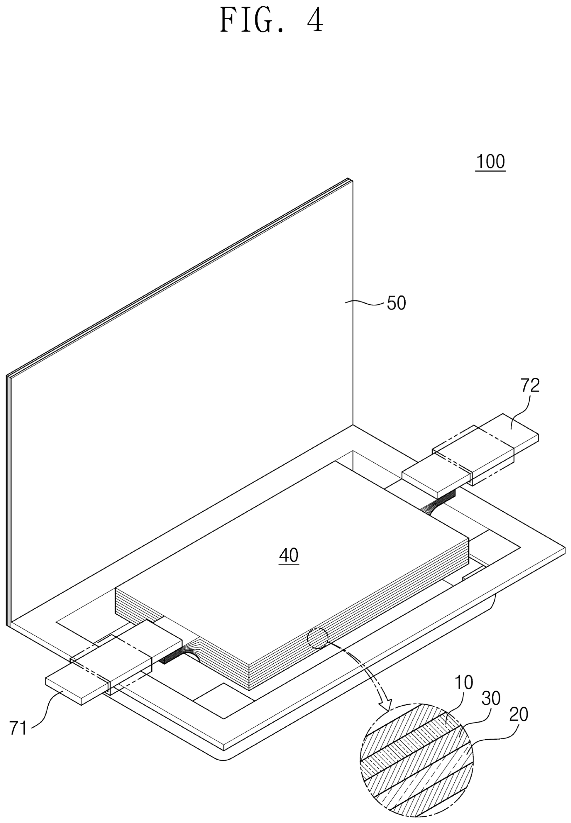

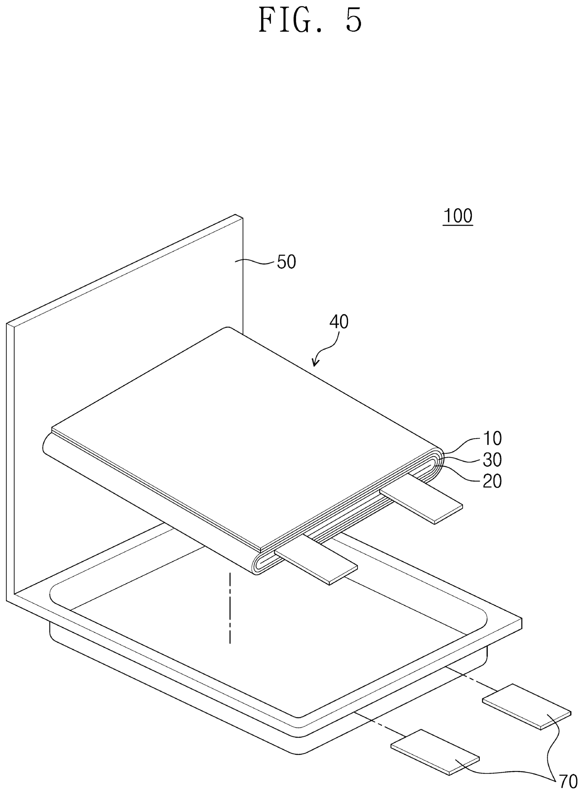

The rechargeable lithium battery may be classified into cylindrical, prismatic, pouch, coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may also include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment of the present disclosure may be applied to, e.g., automobiles, mobile phones, and/or various types of electric devices, and the present disclosure is not limited thereto.

### Insulating layer ISL

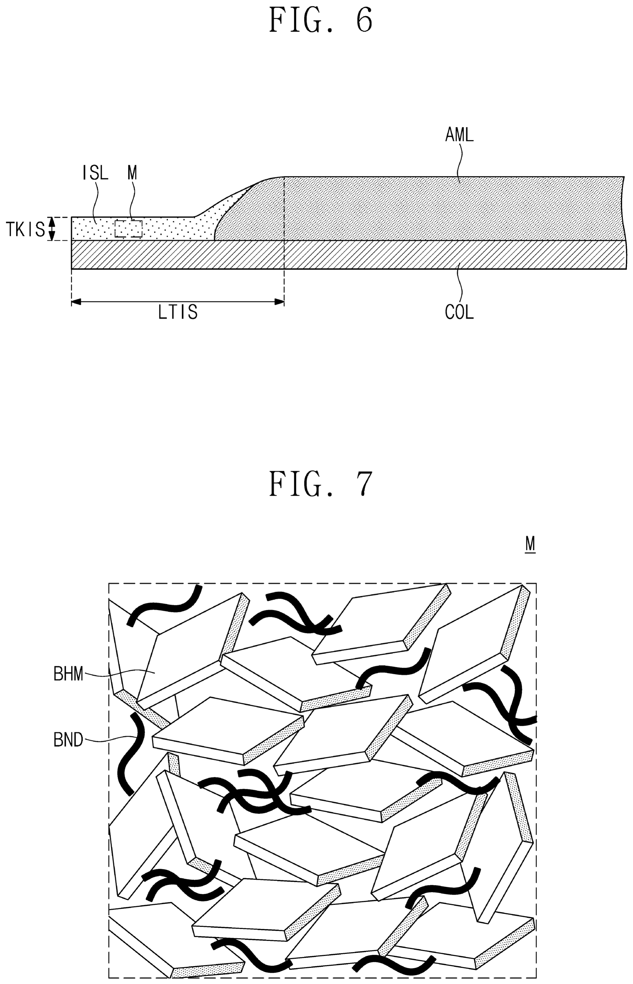

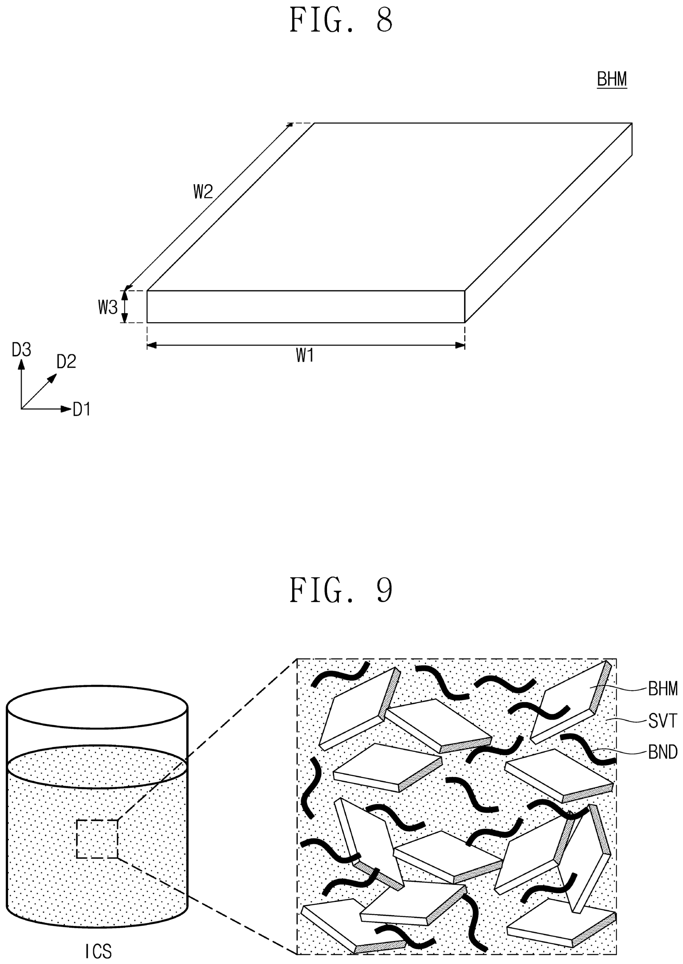

FIG. 6 is a cross-sectional view illustrating an example of a rechargeable lithium battery including an insulating layer according to example embodiments of the present disclosure. FIG. 7 is an enlarged view of region "M" of FIG. 6, which is a schematic diagram illustrating an insulating layer according to example embodiments of the present disclosure. FIG. 8 is a schematic diagram illustrating a boehmite particle according to example embodiments of the present disclosure.

Referring to FIG. 6, an insulating layer ISL according to examples of the present disclosure may be included in a rechargeable lithium battery. The rechargeable lithium battery may include an all-solid-state battery. The insulating layer ISL may be included in a region that benefits from insulation in the rechargeable lithium battery. The insulating layer ISL may be attached to the region that may need insulation and may insulate the corresponding region. For example, the insulating layer ISL may be provided to at least one of a positive electrode layer or a negative electrode layer.

The insulating layer ISL may be formed by applying an insulating coating composition (see ICS in FIG. 9) to be described below onto a current collector COL and an electrode active material layer AML. For example, the insulating layer ISL may be in contact with an end portion of at least one side of the electrode active material layer AML and a non-coated part. The non-coated part may be or include a portion in which the electrode active material layer AML is not formed. The end portion of one side may be a region on a side of the electrode active material layer AML protruding in a direction toward the non-coated part as an electrode active material layer slurry is applied onto the current collector COL and dried to form the electrode active material layer AML. For example, the insulating layer ISL may be positioned to be in contact with the end portion of one side of the electrode active material layer AML and a tab part of the current collector COL. Therefore, the insulating layer ISL may hinder or prevent the electrode active material layer AML from being delaminated from the current collector COL, and may hinder or prevent an internal short circuit from occurring by the contact between the positive electrode layer and the negative electrode layer.

The insulating layer ISL may have a length LTIS and a thickness TKIS that are enough to bond the insulating layer ISL to a region that may benefit from insulation, and insulate the corresponding region.

For example, the thickness TKIS of the insulating layer ISL may be in a range of ≥ 10 µm to ≤ 30 µm. The insulating layer ISL may have a uniform, or substantially uniform, thickness TKIS. When the thickness TKIS falls within the above-described range, the insulating layer ISL may be bonded to the region that may need insulation, and may insulate the corresponding region.

Referring to FIG. 7, the insulating layer ISL may include a boehmite particle BHM and a binder BND.

The boehmite particle BHM may have insulation. The insulation may be a property of reducing or preventing the flow of current. The boehmite particle BHM may have almost no electrical conductivity.

A weight ratio of the boehmite particle BHM to the binder BND may be in a range of ≥ 5:5 to ≤ 8:2. For example, the weight ratio of the boehmite particle BHM to the binder BND may be in a range of ≥ 5:5 to ≤ 7:3. When the weight ratio of the boehmite particle BHM and the binder BND falls within the above-described range, the insulating layer ISL may be well-bonded to a region that may benefit from insulation, and insulate the corresponding region, and may reduce or prevent an internal short circuit of the rechargeable lithium battery.

Referring to FIG. 8, the boehmite particle BHM may have a plate-like structure extending in a first direction D1 and a second direction D2. The plate-like structure may have a thin and flat shape.

The boehmite particle BHM may have a large flat surface defined by the first direction D1 and the second direction D2. The flat surface may be a quadrangle. For example, the flat surface may be a rectangle, diamond, square, parallelogram, and the like. The boehmite particle BHM may have a relatively large first width W1 and second width W2 respectively in the first direction D1 and the second direction D2. The first width W1 may be equal to or larger than the second width W2.

The first width W1 and the second width W2 may be larger than a thickness W3 in a third direction D3. For example, a ratio of the thickness W3 to the first width W1 (thickness W3 / first width W1) may be in a range of 0.8 or less. For example, the ratio of the thickness W3 to the first width W1 may be in a range of ≥ 0.1 to ≤ 0.8.

A ratio of the thickness W3 to the second width W2 (thickness W3 / second width W2) may be in a range of 0.8 or less. For example, the ratio of the thickness W3 to the second width W2 may be in a range of ≥ 0.1 to ≤ 0.8.

For example, the first width W1 and the second width W2 may each be in a range of ≥ 500 nm to ≤ 3.2 µm.

The boehmite particle BHM may have a relatively small thickness W3 in the third direction D3. For example, the thickness W3 may be in a range of ≥ 50 nm to ≤ 1.5 µm.

For example, the first width W1, the second width W2, and the thickness W3 may be measured with, e.g., a transmission electron microscope (TEM) image or a scanning electron microscope (SEM) image of the boehmite particle BHM.

In this specification, the first direction D1 may cross the second direction D2. The third direction D3 may cross each of the first direction D1 and the second direction D2. The third direction D3 may be perpendicular to the first direction D1 and the second direction D2. For example, the first direction D1, the second direction D2, and the third direction D3 may be orthogonal to each other.

The boehmite particle BHM in the insulating layer ISL may have an average particle diameter (D50) in a range of ≥ 500 nm to ≤ 3.2 µm. When the average particle diameter (D50) of the boehmite particle BHM in the insulating layer ISL falls within the above-described range, the insulating layer ISL may be well-bonded to a region that needs insulation and may insulate the corresponding region, and may reduce or prevent an internal short circuit of the rechargeable lithium battery.

For example, the average particle diameter (D50) may be measured by a method known to those skilled in the art, and for example, may be measured by a particle size analyzer, or may also be measured using a transmission electron microscope (TEM) image or a scanning electron microscope (SEM) image. Alternatively, the average particle diameter may be measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

Since the boehmite particle BHM has a plate-like structure, the boehmite particles BHM may not overlap or align with each other when compressed in a solid state, and may include relatively large amounts of empty spaces between the particles. The boehmite particle BHM may have a relatively low tap density. The tap density of the boehmite particle BHM may be in a range of 1.1 g/cm³ or less. For example, the tap density of the boehmite particle BHM may be in a range of ≥ 0.2 g/cm³ to ≤ 1.1 g/cm³.

The insulating layer ISL may be formed by using an insulating coating composition to be described below. The boehmite particle BHM may have a plate-like structure, and may thus have a relatively large surface area. In a liquid, the boehmite particle BHM may have a large area that allows the particles to interact with each other. In a liquid, the boehmite particle BHM may be readily dispersed through strong interaction between the particles. The boehmite particle BHM may be substantially evenly dispersed in the insulating coating composition. Therefore, the boehmite particle BHM may also be substantially evenly dispersed in the insulating layer ISL.

Since the boehmite particle BHM is substantially evenly dispersed in the insulating layer ISL, the insulating layer ISL may secure a substantially uniform insulation. The well-dispersed boehmite particles BHM may exhibit insulation characteristics individually without adhering to each other. Therefore, the insulating layer ISL may have desired or improved insulation, and may reduce or prevent an internal short circuit in the rechargeable lithium battery.

The binder BND may bind the boehmite particles BHM to each other, and may bind the boehmite particles BHM to the current collector COL. For example, the binder BND may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. However, an example embodiment of the present disclosure is not limited thereto.

The binder BND may also be substantially evenly dispersed in the insulating coating composition and the insulating layer ISL. Therefore, the binder BND may effectively bond the insulating layer ISL to a region that needs insulation. In addition, the binder BND may effectively bind the boehmite particles BHM to each other, thereby providing the insulating layer ISL having a substantially uniform thickness within a desired range and having desired or improved insulation.

### Insulating Coating Composition

FIG. 9 is a schematic diagram illustrating an insulating coating composition according to example embodiments of the present disclosure. Hereinafter, for the convenience of description, the same contents as those described with reference to FIGS. 1 to 8 are omitted, and the differences therefrom are mainly described in detail.

Referring to FIG. 9, an insulating coating composition ICS may include a boehmite particle BHM, a binder BND, and a solvent SVT.

Each of the boehmite particle BHM and the binder BND is the same as described above.

Any solvent may be used as the solvent SVT, as long as the boehmite particle BHM and the binder BND may be dispersed therein. For example, the solvent SVT may include at least one of an organic solvent or an aqueous solvent. For example, the organic solvent may include at least one of N-methyl-2-pyrrolidone (NMP), acetone, tetrahydrofuran, alcohol, dimethyl sulfoxide, and the like, and a mixture of two or more solvents may also be used. For example, the aqueous solvent may include water, polyvinyl alcohol, and the like, and a mixture of two or more solvents may also be used.

The insulating coating composition ICS may be included in a current collector COL and an electrode active material layer AML to form an insulating layer ISL. For example, the insulating coating composition ICS may be applied onto an end portion of at least one side of the electrode active material layer AML and onto a non-coated part. The applying may be performed by stripe coating in which the insulating coating composition (see ICS in FIG. 9) is continuously injected, or by patch coating in which the insulating coating composition is discontinuously injected. For example, the insulating coating composition ICS may be applied onto the end portion of one side of the electrode active material layer AML and onto a tab part of the current collector COL.

The insulating coating composition ICS may have a viscosity in a range of ≥ 800 cP to ≤ 1200 cP at about 25 °C. When the viscosity of the insulating coating composition ICS falls within the above-described range, the boehmite particle BHM and the binder BND may be substantially evenly dispersed in the insulating coating composition ICS, the dispersion stability and storage stability may be improved, and the insulating coating composition ICS may be readily applied.

The amount of solid content in the insulating coating composition ICS may be in a range of ≥ 8 wt% to ≤ 40 wt% on the basis of the total weight of the insulating coating composition ICS. For example, the amount of solid content in the insulating coating composition ICS may be in a range of ≥ 10 wt% to ≤ 20 wt% on the basis of the total weight of the insulating coating composition ICS. The solid content in the insulating coating composition ICS may include the boehmite particle BHM and the binder BND. When the amount of solid content in the insulating coating composition ICS falls within the desired range, the insulating coating composition ICS may have a desired viscosity. In addition, the boehmite particle BHM and the binder BND may be substantially evenly dispersed in the insulating coating composition ICS, the dispersion stability and storage stability may be improved, and the insulating coating composition ICS may be readily applied.

In the insulating coating composition ICS, the weight ratio of the boehmite particle BHM and the binder BND may be in a range of ≥ 5:5 to ≤ 8:2. For example, in the insulating coating composition ICS, the weight ratio of the boehmite particle BHM and the binder BND may be in a range of ≥ 5:5 to ≤ 7:3. When the weight ratio of the boehmite particle BHM and the binder BND falls within the above-described range, the insulating coating composition ICS may have a desired viscosity. In addition, the boehmite particle BHM and the binder BND may be substantially evenly dispersed in the insulating coating composition ICS, the dispersion stability and storage stability may be improved, and the insulating coating composition ICS may be readily applied.

For example, the insulating coating composition ICS may further include another additive such as a dispersant.

The insulating coating composition ICS according to the present disclosure may include the boehmite particle BHM and the binder BND that are substantially evenly dispersed. The insulating coating composition ICS may have desired or improved dispersion stability and storage stability. Even though the boehmite particle BHM and the binder BND in the insulating coating composition ICS are left for long time, the boehmite particle BHM and the binder BND may be relatively evenly dispersed in the insulating coating composition ICS.

For example, the change in viscosity may be less than about 20% relative to the initial viscosity after the insulating coating composition ICS is left for 90 days at about 25 °C. The change in viscosity may refer to the difference between the initial viscosity of the insulating coating composition and the viscosity of the insulating coating composition after being left for 90 days (viscosity after being left for 90 days - initial viscosity). For example, the change in viscosity may be in a range of 200 cP or less. For example, the change in viscosity may be about 0 cP or greater and less than about 200 cP, or greater than about 0 cP and less than about 200 cP. The initial viscosity may be a viscosity of the insulating coating composition ICS immediately after preparation.

For example, the viscosity may be measured using, e.g., a rotational viscometer, a falling ball viscometer, a capillary viscometer, a cone and plate viscometer, a vibrational viscometer, a digital viscometer, a rheometer, a pancake viscometer, and the like.

For example, the viscosity may be measured by a rheometer, and may be measured at a shear rate in a range of ≥ 5/s to ≤ 20/s.

For example, the change in average particle diameter of the boehmite particle BHM, after the insulating coating composition ICS is left for 90 days at about 25 °C, may be less than about 60% relative to the initial average particle diameter. The change in average particle diameter may be defined as the difference between the initial average particle diameter and the average particle diameter after the insulating coating composition is left for 90 days (average particle diameter after being left for 90 days - initial average particle diameter). For example, the change in average particle diameter may be less than about 1.2 µm. For example, the change in average particle diameter may be about 0 µm or greater and less than about 1.2 µm, or greater than about 0 µm and less than about 1.2 µm. For example, the initial average particle diameter may be an average particle diameter obtained by measuring the pure boehmite particle BHM, before the insulating coating composition ICS is prepared, using a particle size analyzer. For example, the average particle diameter after being left for 90 days may be an average particle diameter measured, using a particle size analyzer, after the insulating coating composition ICS is left for 90 days and then diluted about 200 times. For example, the initial average particle diameter of the boehmite particle BHM may be in a range of ≥ 2 µm to ≤ 2.5 µm, and the average particle diameter after being left for 90 days may be in a range of ≥ 2 µm to ≤ 3.2 µm.

For example, when the insulating coating composition ICS is left for 24 days at about 25 °C, the amount of solid content in the upper part may be about 85% or greater relative to the initial amount of solid content in the upper part. For example, after the insulating coating composition ICS is left for 24 days at about 25 °C, the amount of solid content in the upper part may be in a range of ≥ 85% to ≤ 90% relative to the initial amount of solid content in the upper part. The upper part may be a region from the outermost surface of the insulating coating composition ICS to ≤ 10% of the total depth of the insulating coating composition ICS. For example, the amount of solid content in the upper part may be obtained by collecting and drying the upper part of the insulating coating composition ICS, and then measuring the weight of the remaining solid. For example, the amount of solid content in the upper part may be analyzed through measuring the viscosity and conductivity of the upper part of the insulating coating composition ICS.

By using the insulating coating composition ICS according to examples of the present disclosure, it may be possible to prepare the insulating layer ISL in which the boehmite particle BHM and the binder BND are substantially evenly dispersed. Since the boehmite particle BHM is substantially evenly dispersed in the insulating layer ISL, the insulating layer ISL may secure a substantially uniform insulation. Therefore, the insulating layer ISL may have desired or improved insulation, and may reduce or prevent an internal short circuit in the rechargeable lithium battery.

Hereinafter, the present disclosure is described in more detail through examples. However, the following examples are merely presented to exemplify the present disclosure, and the scope of the present disclosure is not limited thereto.

### Example 1

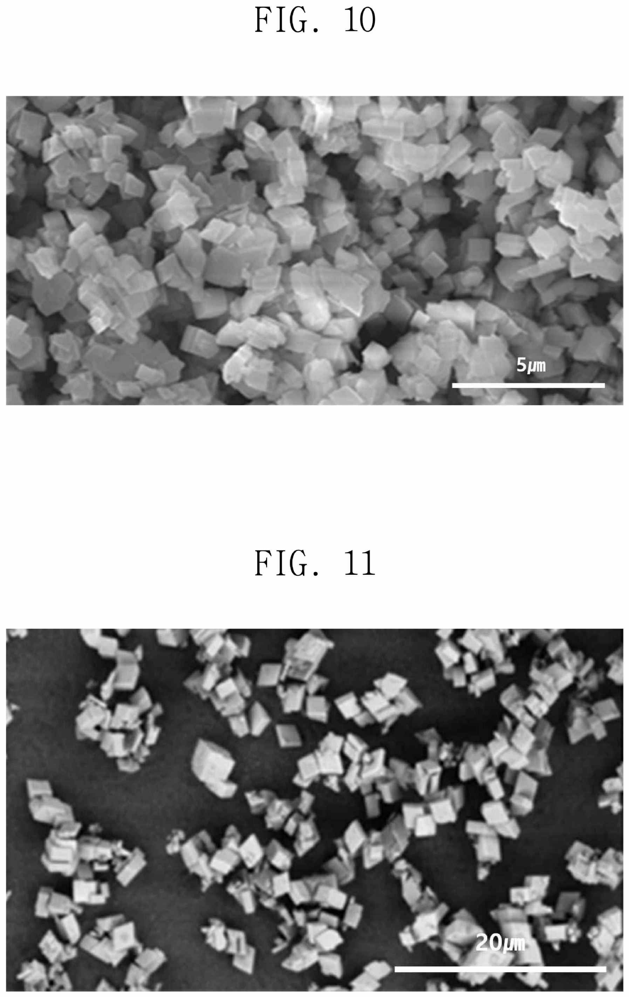

A boehmite particle (Tor special minerals), in which the ratio of a thickness W3 to a first width W1 was about 0.2, the ratio of the thickness W3 to a second width W2 was about 0.2, the tap density was about 1.072 g/cm³, and the average particle diameter (D50) measured using a particle size analyzer was about 2.12 µm, was prepared (see FIG. 10).

A binder (PVDF) was put into a solvent (NMP) to prepare a binder solution in an amount of about 1%, a dispersant was added thereto, and then the boehmite particle was mixed therein such that the boehmite particle and the binder (PVDF) had a weight ratio of about 7:3. The solvent (NMP) was added such that the amount of solid content became about 20% to prepare an insulating coating composition. The prepared insulating coating composition had a viscosity of about 1000 cP at about 25 °C (measured with an Anton Paar rheometer at a shear rate of about 10/s).

### Example 2

An insulating coating composition was prepared in the same manner as that of Example 1, with a difference that the boehmite particle was mixed such that the weight ratio of the boehmite particle to the binder (PVDF) became about 6:4, and the solvent (NMP) was added such that the amount of solid content became about 16%.

### Example 3

An insulating coating composition was prepared in the same manner as that of Example 1, with a difference that the boehmite particle was mixed such that the weight ratio of the boehmite particle to the binder (PVDF) became about 5:5, and the solvent (NMP) was added such that the amount of solid content became about 12%.

### Comparative Example 1

An insulating coating composition was prepared in the same manner as that of Example 1, with a difference that a boehmite particle below was used.

A boehmite particle (Konosima Chemical Co., Ltd.), in which the ratio of a thickness W3 to a first width W1 was about 0.9, the ratio of the thickness W3 to a second width W2 was about 0.9, the tap density was about 1.201 g/cm³, and the average particle diameter (D50) measured using a particle size analyzer was about 2.74 µm, was prepared (see FIG. 11).

### Comparative Example 2

An insulating coating composition was prepared in the same manner as that of Comparative Example 1, with a difference that the boehmite particle was mixed such that the weight ratio of the boehmite particle and the binder (PVDF) became about 6:4, and the solvent (NMP) was added such that the amount of solid content became about 16%.

### Comparative Example 3

An insulating coating composition was prepared in the same manner as that of Comparative Example 1, with a difference that the boehmite particle was mixed such that the weight ratio of the boehmite particle to the binder (PVDF) became about 5:5, and the solvent (NMP) was added such that the amount of solid content became about 12%.

### Experiment Example 1: Evaluation on Stability of Insulating Coating Composition Over Time

In order to evaluate the stability of the insulating coating composition, according to each of Examples 1 to 3 and Comparative Examples 1 to 3, over time, the change rate in viscosity, the change rate in average particle diameter, and the amount ratio of solid content in the upper part were obtained.

The change rate in viscosity was expressed by the ratio of the difference between an initial viscosity of the insulating coating composition and a viscosity after the insulating coating composition was left at about 25 °C for 30 days or 90 days to the initial viscosity ((viscosity after being left for 30 days or 90 days-initial viscosity) / initial viscosity). The initial viscosity refers to a viscosity of the insulating coating composition immediately after preparation, and was expressed as 0 day. The viscosity was measured using an Anton Paar rheometer at about 25 °C, and the viscosity value at a shear rate of about 10/s was considered as a representative value. The results were listed in Table 1 below.

The change rate in average particle diameter was expressed by the ratio of the difference between an average particle diameter of the boehmite particle and an average particle diameter after the insulating coating composition was left at about 25 °C for 30 days or 90 days to the average particle diameter of the boehmite particle ((average particle diameter after being left for 30 days or 90 days-average particle diameter of the boehmite particle) / average particle diameter of the boehmite particle). The average particle diameter of the boehmite particle was expressed as 0 day. The average particle diameter was measured using a particle size analyzer (Malvern Mastersizer 3000). The average particle diameter after being left for 30 days or 90 days may be an average particle diameter measured using a particle size analyzer after the insulating coating composition was left for 30 days or 90 days and diluted about 200 times. The results were listed in Table 2 below.

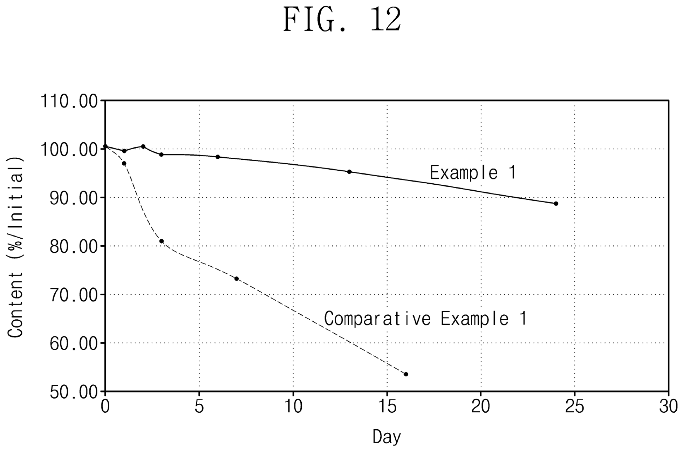

The amount ratio of solid content in the upper part was expressed by the ratio of the amount of solid content in the upper part after the insulating coating composition was left for 24 days at about 25 °C to the amount of solid content in the upper part of the insulating coating composition immediately after preparation (amount of solid content in the upper part after being left for 24 days / initial amount of solid content). The amount of solid content in the upper part was obtained by collecting and drying a region from the outermost surface of the insulating coating composition to ≤ 10% of the total depth of the insulating coating composition ICS and then measuring the weight of the remaining solid. The results were shown in FIG. 12.

### Evaluation Criteria for Change Rate in Viscosity:

Change rate in viscosity less than about 20% (viscosity change less than about 200 cP): O
Change rate in viscosity in a range of ≥ 20% to ≤ 30% (viscosity change of ≥ 200 cP to ≤ 300 cP): △
Change rate in viscosity greater than about 30% (viscosity change greater than about 300 cP): ×

### Evaluation Criteria for Change Rate in Average Particle Diameter:

Change rate in average particle diameter less than about 60% (average particle diameter of about 2.0 µm or greater and less than about 3.2 µm): ○
Change rate in average particle diameter in a range of about 60% to about 125% (average particle diameter of about 3.2 µm to about 4.5 µm): △
Change rate in average particle diameter greater than about 125% (average particle diameter greater than about 4.5 µm): ×

**Table 1:**

| Classification | 0-day change rate in viscosity | 30-day change rate in viscosity | 90-day change rate in viscosity |
|---|---|---|---|
| Example 1 | ○ | ○ | ○ |
| Example 2 | ○ | ○ | ○ |
| Example 3 | ○ | ○ | ○ |
| Comparative Example 1 | ○ | Δ | Δ |
| Comparative Example 2 | ○ | Δ | × |
| Comparative Example 3 | ○ | × | × |

**Table 2:**

| Classification | 0-day change rate in avg particle diameter | 30-day change rate in avg particle diameter | 90-day change rate in avg particle diameter |
|---|---|---|---|
| Example 1 | ○ | ○ | ○ |
| Example 2 | ○ | ○ | ○ |
| Example 3 | ○ | ○ | ○ |
| Comparative Example 1 | ○ | Δ | × |
| Comparative Example 2 | Δ | × | × |
| Comparative Example 3 | Δ | × | × |

Referring to Table 1 and Table 2 above, the insulating coating compositions according to Examples 1 to 3 had an insignificant change rate in viscosity and change rate in average particle diameter, even after being left for 30 days or 90 days, unlike the insulating coating compositions according to Comparative Examples 1 to 3.

Referring to FIG. 12, the amount of solid content in the upper part, after the insulating coating composition according to Example 1 was left for 24 days at about 25 °C, was about 89% relative to the initial (0 day) amount of solid content in the upper part. On the contrary, the amount of solid content in the upper part, after the insulating coating composition according to Comparative Example 1 was left for 24 days at about 25 °C, was less than about 54% relative to the initial (0 day) amount of solid content in the upper part.

Accordingly, it can be seen that the insulating coating compositions according to Examples 1 to 3 had desired or improved dispersion stability and storage stability, and the boehmite particle and the binder were substantially evenly dispersed in the insulating coating composition.

### Experiment Example 2: Insulation Evaluation of Insulating Layer

Insulating layers were prepared using the insulating coating compositions according to Examples 1 to 3 and Comparative Examples 1 to 3, and the breakdown voltage (BDV) was measured.

The insulating coating composition was applied onto a polyethylene substrate and dried to prepare an insulating layer having a thickness of about 12 µm.

The breakdown voltage (BDV) was measured using a voltage tester (TOS-5300 of KIKUSUI). A stainless steel (SUS) plate was connected to a negative (-) electrode of the voltage tester, and a broom-shaped probe was connected to a positive (+) electrode. The current was set in DC mode, the voltage increase was set up to about 4500 V for about 8 seconds, and the detection voltage was set to about 0.3 mA.

The insulating layer was spread flat on the SUS plate, the probe was placed on the insulating layer, then a voltage at which the voltage increase stops (break, short) in the above conditions was measured, and the voltage was considered as a breakdown voltage (BDV) value.

The results were listed in Table 3 below.

**Table 3:**

| Classification | BDV (V) |
|---|---|
| Example 1 | 0.57 |
| Example 2 | 0.52 |
| Example 3 | 0.43 |
| Comparative Example 1 | 0.20 |
| Comparative Example 2 | 0.18 |
| Comparative Example 3 | 0.11 |

Referring to Table 3, the insulating layers prepared according to Examples 1 to 3 had larger breakdown voltage (BDV) values than the insulating layers prepared according to Comparative Examples 1 to 3. Accordingly, it can be seen that the insulating layers prepared according to Examples 1 to 3 had a desired or improved insulation.

An insulating coating composition according to an example embodiment of the present disclosure may have a desired or improved dispersibility, and desired or improved dispersion stability and storage stability. In addition, the insulating coating composition according to an example embodiment of the present disclosure may be relatively simple to apply, so that coating processibility may also be desired or improved.

An insulating layer according to an example embodiment of the present disclosure may have a desired or improved insulation, as insulating particles and a binder are substantially evenly distributed in the insulating layer.

A rechargeable lithium battery according to an example embodiment of the present disclosure may hinder or prevent an internal short circuit, and may have desired or improved safety.

Although the example embodiments of the present disclosure have been described with reference to the accompanying drawings, it is understood that the present disclosure may also be implemented in other specific forms without modifying the technical ideas or essential characteristics thereof. Therefore, the example embodiments described above should be understood in all respects as illustrative and not limiting.

## Claims

1. An insulating coating composition, comprising:
a boehmite particle; and
a binder;
wherein the boehmite particle has a plate-like structure extending in a first direction and a second direction that crosses the first direction,
the boehmite particle has:
a first width in the first direction;
a second width in the second direction; and
a thickness in a third direction perpendicular to the first direction and the second direction,
a ratio of the thickness to the first width is in a range of 0.8 or less, and
a ratio of the thickness to the second width is in a range of 0.8 or less.

2. The insulating coating composition of claim 1, wherein the boehmite particle has a tap density in a range of 1.1 g/cm³ or less.

3. The insulating coating composition of claim 1 or 2, wherein the boehmite particle has an average particle diameter in a range of ≥500 nm to ≤ 3.2 µm.

4. The insulating coating composition of any of the claims 1 to 3, wherein a weight ratio of the boehmite particle and the binder is in a range of ≥ 5:5 to ≤ 8:2.

5. The insulating coating composition of any of the claims 1 to 4, wherein an amount of solid content in the insulating coating composition is in a range of ≥ 8% to ≤ 40%.

6. The insulating coating composition of any of the claims 1 to 5, wherein the insulating coating composition has a viscosity in a range of ≥ 800 cP to ≤ 1200 cP at about 25 °C, as determined using an Anton Paar rheometer at a shear rate of 10/s.

7. The insulating coating composition of any of the claims 1 to 6, wherein, after the insulating coating composition is left for 90 days at about 25 °C, a change in viscosity is less than about 20% relative to an initial viscosity.

8. The insulating coating composition of any of the claims 1 to 7, wherein, after the insulating coating composition is left for 90 days at about 25 °C, a change in average particle diameter is less than about 60% relative to an average particle diameter of the boehmite.

9. The insulating coating composition of any of the claims 1 to 8, wherein, after the insulating coating composition is left for about 24 days at about 25 °C, an amount of solid content in an upper part is about 85% or greater relative to an initial amount of solid content in the upper part.

10. The insulating coating composition of any of the claims 1 to 9, further comprising a solvent,
wherein the solvent includes at least one of an organic solvent and an aqueous solvent.

11. An insulating layer comprising the boehmite particle and the binder as defined in any of the claims 1 to 4

12. A rechargeable lithium battery comprising:
a positive electrode layer and a negative electrode layer; and
the insulating layer of claim 11.
